# EUROPEAN PATENT SPECIFICATION

(11) **EP 2 811 609 B1**
(45) Date of publication and mention of the grant of the patent: **12.09.2018**
(21) Application number: 13170270.6
(22) Date of filing: 03.06.2013
(51) Int. Cl.: H02J 7/00, H02M 3/24

(54) **Battery balancing with resonant converter**
Batterieausgleich mit Resonanzwandler
Équilibrage de batterie avec convertisseur résonnant

(43) Date of publication of application: 10.12.2014
(73) Proprietor: Dialog Semiconductor GmbH, 73230 Kirchheim (DE)
(72) Inventor: Knoedgen, Horst, 82110 Germering (DE)
(74) Representative: MERH-IP Matias Erny Reichl Hoffmann Patentanwälte PartG mbB

(56) References cited:
- EP-A2- 2 228 883
- GB-A- 2 293 060
- US-A1- 2012 249 189

## Description

### Technical Field

The present document relates to the charging of rechargeable batteries. In particular, the present document relates to the charging of battery stacks comprising a plurality of battery cells.

### Background

Many electrical applications require the transfer of energy from a power supply or electric energy supply (e.g. a mains power supply) to an electronic device comprising a battery. In particular, the electric energy may be transferred from a charging unit (receiving power from the mains power supply) and the electronic device comprising the battery. The battery (or battery stack) may comprise a plurality of battery cells which are arranged in series, thereby increasing the energy storage capacity of the rechargeable battery. The battery cells may e.g. be lithium-ion based battery cells.

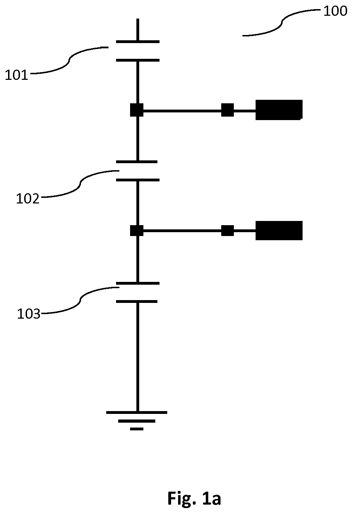

Fig. 1a shows an example battery 100 (also referred to as battery stack or a storage) comprising three battery cells 101, 102, 103 which are arranged in series. The battery cells may also be referred to as storage cells. The battery cells 101, 102, 103 are represented by capacitors. The plurality of different battery cells 101, 102, 103 may have different respective voltage requirements with regards to the voltage required in order to store electric energy within the respective battery cell, i.e. in order to charge the respective battery cell. A conventional charging unit is typically only configured to provide an overall voltage drop across the entire battery 100. The individual voltage drop at the individual battery cells 101, 102, 103 cannot typically be controlled. This may lead to different charging levels within the different battery cells 101, 102, 103.

GB2293060A describes a system for equalizing the charge of a plurality of different cell units. In a similar manner, EP2228883A2 describes an apparatus for equalizing the charging of series connected battery cells. US2012/0249189 describes a resonant gate driver for driving switches in a resonant isolated converter.

The present document addresses the above mentioned technical problem. In particular, the present document describes a charging system and a corresponding method (as well as a corresponding discharging system and method) which are configured to provide a consistent charging / discharging of the plurality of battery cells 101, 102, 103 of a rechargeable battery 100. The systems and methods may be used to balance the charging levels of the different battery cells 101, 102, 103 of a battery stack 100.

### Summary

According to an aspect, a system configured to charge a first subset of storage cells from a storage (e.g. a storage for electric energy) comprising a serial arrangement of storage cells is described. The system may be implemented as an electronic circuit. The system may be implemented in conjunction with a charger for an electronic device comprising the storage for electric energy. The storage may also be referred to as a storage stack. The storage may comprise (or may be) a battery and the storage cells may comprise (or may be) battery cells. The storage of energy may be performed in a chemical manner (as is typically the case for battery cells) and/or in a capacitive manner (as is typically the case of capacitors and super capacitors). A storage cell may comprise one or more battery cells and/or one or more capacitors in parallel and/or in series. The first subset (or any other subset) may comprise one or more directly adjacent storage cells from the serial arrangement of storage cells.

The system may comprise a driver circuit configured to generate an AC voltage at an AC frequency from a power source at a DC voltage. In other words, the driver circuit may be configured to generate AC (alternating current) electrical power (also referred to as electrical energy) from DC (direct current) electrical power provided by a power source. In yet other words, the driver circuit may be configured to generate an AC voltage comprising a frequency component at or with an AC frequency. The frequency component may be or may comprise a sinusoidal frequency component at the AC frequency. The power source may comprise a charger configured to provide a (DC) charge current to the storage at the DC voltage. As such, the system may be configured to individually control the amount of electrical power which is provided to the first set of storage cells. Alternatively or in addition, the power source (also referred to as the electrical energy source) may comprise another subset of storage cells from the storage. The first subset may be different from the another subset of storage cells. As such, the system may be configured to redistribute electrical energy from the another subset of storage cells to the first subset of storage cells.

The driver circuit may comprise a half-bridge comprising a high-side switch and a low side switch which are opened and/or closed in accordance to the AC frequency. The high-side switch and the low-side switch may be opened and/or closed such that at a particular time instant at the most only one of the high-side switch and the low side switch is closed. The AC voltage may be provided at a midpoint of the half-bridge.

The system may comprise a first resonance circuit configured to amplify and/or attenuate the AC voltage as a function of the AC frequency, to yield a modified AC voltage. In particular, an amplitude of the AC voltage may be amplified and/or attenuated. The resonance circuit may exhibit a resonance frequency, such that the first resonance circuit provides a (at least locally) maximum gain for the resonance frequency. On the other hand, the gain may be lower (compared to the gain at the resonance frequency) for AC frequencies which are higher or lower than the resonance frequency. By way of example, the first resonance circuit may comprise a LC and/or a LLC circuit.

Furthermore, the system may comprise a first rectifying unit configured to generate a modified DC voltage from the modified AC voltage. The first rectifying unit may be configured to provide power at the modified DC voltage to the first subset of storage cells. As such, the first rectifying unit may be configured to be or to act as a DC power source, which is configured to provide electrical energy at the modified DC voltage. The rectifying unit may comprise one or more diodes and/or switches. The switches referred to in the present document may comprise transistors, such as metal oxide semiconductor field effect transistors. In particular, the rectifying unit may be configured to perform half-wave or full-wave rectification of the modified AC voltage.

Overall, the driver circuit, the first resonance circuit and the first rectifying unit may form a DC-to-DC power converter which is configured to convert electrical energy at the DC voltage into electrical energy at the modified DC voltage. As such, the system may comprise a DC-to-DC power converter which is configured to convert electrical energy at the DC voltage into electrical energy at the modified DC voltage.

The system may comprise a controller configured to control the driver circuit to generate the AC voltage at the AC frequency. In other words, the controller may be configured to control the switches of the driver circuit to generate the AC voltage with the AC frequency. Furthermore, the controller may be configured to determine the AC frequency in dependence on charging voltage requirements of the first subset of storage cells. By way of example, the charging voltage requirements may be indicative of a minimum voltage drop at the first subset of storage cells, which is required for charging the subset of storage cells.

The controller may be configured to control the amount of electric energy which is provided to the first subset of storage cells. The amount of electric energy which is provided to the first subset of storage cells may be controlled by adjusting the AC frequency. The controller may be configured to control the charging current towards the first subset of storage cells by adjusting the AC frequency.

The system may comprise a first set of switches configured to couple or decouple the rectifying unit to or from the first subset of storage cells. In particular, the system may comprise switch pairs for each storage cell of the storage, thereby allowing the rectifying unit to be coupled to and/or decoupled from each one of the storage cells of the storage. As such, a single resonance circuit may be used to charge (and/or discharge) various storage cells or subsets of storage cells.

The controller may be configured to control the first set of switches to couple the rectifying unit to the first subset of storage cells during a first pre-determined isolated time slot assigned to the charging of the first subset of storage cells. Different (disjoint) time slots may be assigned to different subsets of storage cells, thereby enabling a time multiplexing of the different subsets of storage cells. Within a given time slot, the set of switches may be controlled to couple the rectifying unit to the particular subset of storage cells, to which the given time slots is assigned to. On the other hand, the controller may be configured to control the first set of switches to decouple the rectifying unit) from the first subset of storage cells (and/or to anther subset of storage cells) during a second pre-determined isolated time slot which is not assigned to the charging of the first subset of storage cells (and/or of the another subset of storage cells).

The controller may be configured to receive an indication of the DC voltage. In particular, the controller may be configured to determine variations of the DC voltage. Furthermore, the controller may be configured to determine the AC frequency in dependence on the DC voltage, such that relative absolute variations of the modified DC voltage are at or below a pre-determined variation threshold. As such, the controller may be used to stabilize the modified DC voltage, subject to variations of the DC voltage.

The resonance frequency of the first resonance circuit may be adapted based on the charging voltage requirements of the first subset of storage cells. In particular, the resonance frequency of the first resonance circuit may be adapted to the minimum voltage drop at the first subset of storage cells, which is required to charge the first subset of storage cells.

As indicated above, the system may comprise an LLC circuit. In particular, the system may comprise a transformer comprising a primary inductor and a first and a second secondary inductor which are magnetically coupled to the primary inductor. The first resonance circuit may comprise the first secondary inductor. Furthermore, the system may comprise a second resonance circuit comprising the second secondary inductor. The second resonance circuit may be used (e.g. in conjunction with a further rectifying unit) to charge a second subset of storage cells from the storage. As such, a plurality of resonance circuits may be provided for a corresponding plurality of subsets of storage cells, using a plurality of secondary inductors of the transformer. The plurality of resonance circuits (notably the first and second resonance circuits) may have different resonance frequencies. As indicated above, the different resonance frequencies may be adapted to the voltage requirements (for charging / discharging) of the corresponding plurality of subsets of storage cells.

According to a further aspect, a system configured to discharge a subset of storage cells from a storage comprising a serial arrangement of storage cells is described. The system may comprise similar components and features as the system configured to charge the subset of storage cells. In particular, the system may comprise a driver circuit configured to generate an AC voltage at an AC frequency from power at a DC voltage, wherein the power is taken from (or drawn from) the subset of storage cells. Furthermore, the system may comprise a resonance circuit configured to amplify and/or attenuate the AC voltage as a function of the AC frequency, to yield a modified AC voltage. In addition, the system may comprise a rectifying unit configured to generate a modified DC voltage from the modified AC voltage, and to provide power at the modified DC voltage.

An output of the rectifying unit may be coupled to an input of the serial arrangement of storage cells. The input of the serial arrangement of storage cells may e.g. correspond to a high voltage pin of the storage, wherein the storage typically comprises a high voltage pin and an opposed low voltage pin (which may be coupled to ground). The system may be configured to provide the power at the modified DC voltage to one or more storage cells of the storage.

According to a further aspect, a method for charging a first subset of storage cells from a storage comprising a serial arrangement of storage cells is described. The method comprises generating an AC voltage at an AC frequency from a power source at a DC voltage. The method proceeds in amplifying and/or attenuating the AC voltage as a function of the AC frequency, to yield a modified AC voltage. Furthermore, the method comprises generating a modified DC voltage from the modified AC voltage. In addition, the method may comprise providing power at the modified DC voltage to the first subset of storage cells.

According to another aspect, a method for discharging a subset of storage cells from a storage comprising a serial arrangement of storage cells is described. The method comprises generating an AC voltage at an AC frequency from power at a DC voltage taken from the subset of storage cells. Furthermore, the method comprises amplifying and/or attenuating the AC voltage as a function of the AC frequency, to yield a modified AC voltage. In addition, the method comprises generating a modified DC voltage from the modified AC voltage.

According to a further aspect, a software program is described. The software program may be adapted for execution on a processor and for performing the method steps outlined in the present document when carried out on the processor.

According to another aspect, a storage medium is described. The storage medium may comprise a software program adapted for execution on a processor and for performing the method steps outlined in the present document when carried out on the processor.

According to a further aspect, a computer program product is described. The computer program may comprise executable instructions for performing the method steps outlined in the present document when executed on a computer.

It should be noted that the methods and systems including its preferred embodiments as outlined in the present document may be used stand-alone or in combination with the other methods and systems disclosed in this document. In addition, the features outlined in the context of a system are also applicable to a corresponding method. Furthermore, all aspects of the methods and systems outlined in the present document may be arbitrarily combined. In particular, the features of the claims may be combined with one another in an arbitrary manner.

In the present document, the term "couple" or "coupled" refers to elements being in electrical communication with each other, whether directly connected e.g., via wires, or in some other manner.

### Short description of the Figures

The invention is explained below in an exemplary manner with reference to the accompanying drawings, wherein
Fig. 1a illustrates an example rechargeable battery comprising a plurality of battery cells;
Fig. 1b shows an example charging system configured to adjust the charging level of a particular one of the plurality of battery cells;
Figs. 2a and 2b show an example charging system and a corresponding discharging system configured to control the energy level of a particular one of the plurality of battery cells;
Figs. 3a, 3b, 3c and 3d show block diagrams of example charging systems configured to control the charging level of a plurality of battery cells;
Fig. 4 shows an example voltage / frequency diagram of an example charging system;
Fig. 5 shows a block diagram of an example charging system;
Fig. 6 shows a block diagram of another example charging system; and
Fig. 7 shows a flow chart of an example method for controlling the charging level of a battery cell of a rechargeable battery comprising a plurality of battery cells.

### Detailed Description

As indicated in the background section, the present document addresses the technical problem of a consistent charging of a rechargeable battery 100 comprising a plurality of battery cells 101, 102, 103. A problem in this context is that one or more of the plurality of battery cells 101, 102, 103 may receive a reduced current during charging or that the charge can only be added to one or more of the plurality of battery cells 101, 102, 103, while no charge is added to the other battery cells. This technical problem may be caused to the fact that converters (or charging units) are not flexible with respect to different voltage requirements of the different battery cells 101, 102, 103 of a battery 100. In other words, charging units may not be configured to control the individual voltage drop at the individual battery cells, in order to ensure that the individual voltage drop exceeds a minimum, battery cell dependent, voltage level.

It is therefore desirable to provide a system which allows for a flexible balancing of the plurality of different battery cells 101, 102, 103 during charging and/or discharging. In particular, the system may be configured to provide flexible input / output voltages for the charging / discharging of one or more of the plurality of battery cells 101, 102, 103.

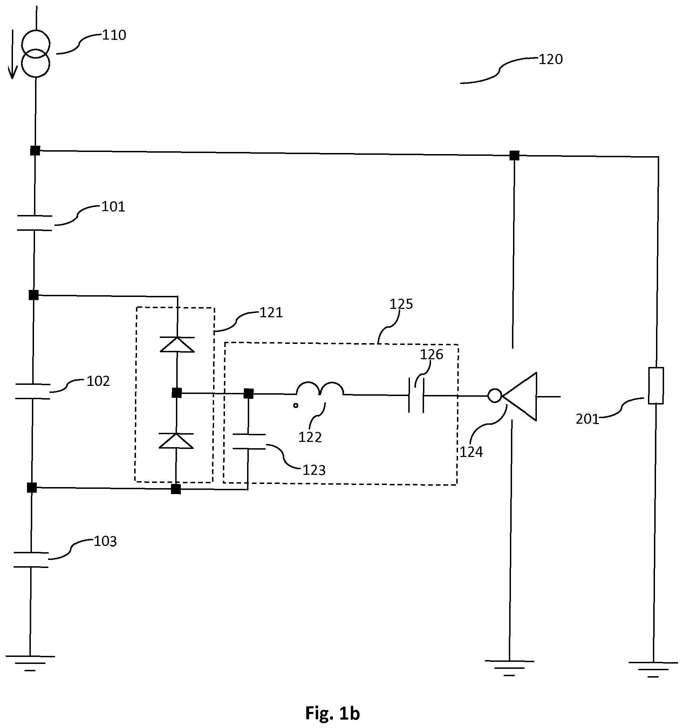

Fig. 1b shows a block diagram of an example system 120 for charging the second battery cell 102 of a battery 100 comprising the plurality of battery cells 101, 102, 103. The system 120 comprises a charger 110 configured to provide electrical energy to be stored within the battery 100. The charger 110 may induce an overall voltage drop at the serial arrangement of battery cells 101, 102, 103, wherein the overall voltage drop is divided into individual voltage drops across the battery cells 101, 102, 103 respectively. The individual voltage drops across the battery cells 101, 102, 103 typically depends on pre-determined characteristics of the battery cells (e.g. the capacitance of the battery cells).

As indicated above, the individual voltage requirements for charging the different battery cells 101, 102, 103 may differ for the different battery cells 10, 102, 103. The charger 110 is typically only configured to control the overall voltage drop, without being able to adjust the individual voltage drops with respect to one another. As a result of this, the charging level of the different battery cells 101, 102, 103 may differ.

The charging system 120 of Fig. 1b comprises a resonant converter configured to provide an adjustable individual voltage drop at the cell 102. In the illustrated example, the resonant converter comprises an LC circuit 125 which is excited by a driver circuit 124. The driver circuit 124 is configured to generate an alternating voltage at a plurality of different frequencies. The LC circuit 125 comprises an inductor 122 and a capacitor 123 and may be viewed as a filter circuit providing a gain at the resonance frequency of the LC circuit 125 and providing an attenuation at one or more frequencies which differ from the resonance frequency. A capacitor 126 may be provided for decoupling purposes. The resonance frequency of the LC circuit 125 depends on the capacitance C of the capacitor 123 and on the inductance L of the inductor 122 (typically the resonance frequency corresponds to the square root of 1/(L*C) for ideal components; whereas when adding some resistive elements, the resonance frequency deviates slightly from the frequency given by the above formula).

As such, it is proposed to make use of a resonant converter (comprising e.g. a LRC, inductance resistance capacitance, circuit). By changing the frequency of the alternating voltage (using the driver circuit 124), the resonant converter may be operated as a buck or a boost converter (i.e. as a step-down converter or as a step-up converter).

By doing this, the individual voltage drop at the battery cell 102 may be increased or lowered. In particular, by changing the frequency of the alternating voltage (also referred to as the AC frequency), the individual voltage drop across the battery cell 102 may be adjusted (e.g. in accordance to the minimum voltage drop required for charging the battery cell 102).

The charging system 120 further comprises a rectifying unit 121 configured to convert the alternating voltage at the output of the LC circuit 125, i.e. at the output of the resonance circuit, into a DC voltage. In the illustrated example, the rectifying unit 121 comprises two diodes configured to rectify the positive half wave and the negative half wave of the alternating voltage at the output of the LC circuit 125. As such, the illustrated rectifying unit 121 comprises a full wave rectifier. Alternatively, the rectifying unit 121 may comprise a half wave rectifier (e.g. using only a single diode configured to let pass only one of the two half waves of the alternating voltage).

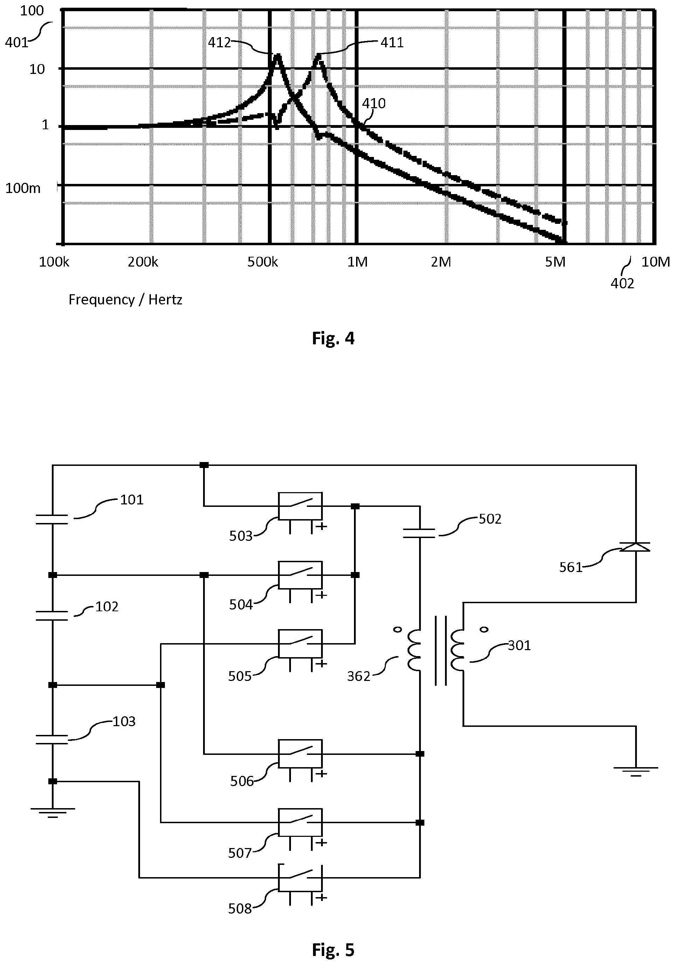

Fig. 4 shows an example voltage / frequency diagram for a resonant converter. In particular, the diagram shows the (amplitude of the) output voltage 401 of the resonant converter as a function of the AC frequency 402. It can be seen that the output voltage 401 exhibits a peak 411 at a particular AC frequency 402, which typically corresponds to the resonance frequency of the LC circuit 125 (or of another resonance circuit). On the other hand, the output voltage 401 drops for frequencies 402 higher (or lower) than the resonance frequency. In particular, the slope 410 for AC frequencies 402 higher than the resonance frequency may be used to adjust the output voltage 401 within a wide range, thereby providing a wide range for step-up and/or step-down conversion.

In the illustrated example of Fig. 1b, the other battery cells of the battery stack 100, i.e. battery cell 101 and battery cell 103, comprise sufficient charge. On the other hand, battery cell 102 requires more charge. The output of the resonant converter (i.e. the output of the rectifying unit 121) is coupled (in parallel) to the cell 102 which is to be charged, such that the rectified output voltage of the rectifying unit 121 corresponds to (or exceeds) the individual voltage drop across the cell 102 which is to be charged. The resonant converter (in particular the driver circuit 124 which generates the alternating voltage) takes over the current (i.e. the electrical energy) from the charger 110. This electrical energy is provided to the cell 102 at an adjustable voltage level, thereby allowing the charging level of the second cell 102 to be individually controlled. It may be stated that the electrical energy circles between the converter and the battery pack 100. This may be due to the fact that the capacitors 123, 126 and the inductor 122 lose little to now electrical energy.

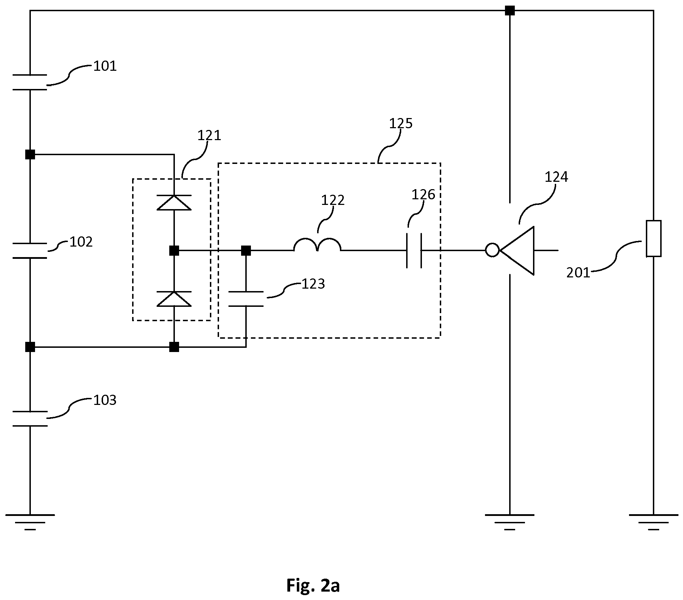

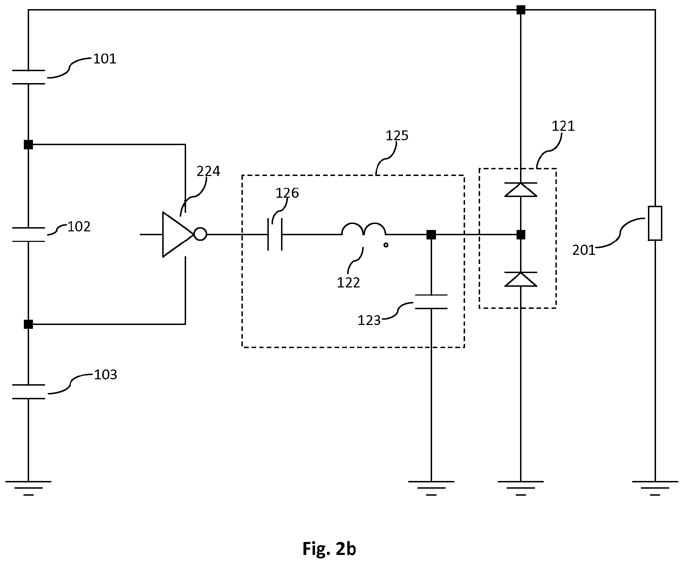

Figs. 2a and 2b illustrate the operation of the charging system of Fig. 1b with a buck function (Fig. 2a) and with a boost function (Fig. 2b). In the illustrated examples, the system is disconnected from the charger 110, such that no external electrical energy is provided to the battery 100 comprising the plurality of battery cells 101, 102, 103. The resonant converter of Fig. 1b may then be used to redistribute the electrical energy which is stored within the plurality of battery cells 101, 102, 103 among the plurality of battery cells 101, 102, 103.

When operated in the buck function (Fig. 2a), the cell 102 is charged from the other two battery cells 101, 13. Cells 101 and 103 provide a part of their stored energy to the cell 102. The amount of energy which is provided to the cell 102 may be controlled by adjusting the AC frequency 402 of the alternating voltage of the resonant converter. Fig. 2a further illustrates a load 201 of the battery 100.

In the boost function (Fig. 2b), the cell 102 may be controlled to be discharged more than the cell 101 and the cell 103. In other words, the system may be configured (by adjusting the AC frequency 402) to control the amount of electrical energy drawn from the different battery cells 101, 102, 103, respectively. In case of Fig. 2b, the resonant converter draws electrical energy from the battery cell 102 using a driver circuit 224. The driver circuit 224 may be configured to convert the DC voltage at the cell 102 into an alternating voltage at a controllable AC frequency 402. For this purpose, the driver circuit 224 (as well as the driver circuit 124) may comprise a half bridge comprising at least two switches (e.g. transistors) which are switched on and off in an alternating, mutually exclusive manner.

As such, the charging levels of the plurality of cells 101, 102, 103 may be balanced. The balancing may be performed at any time, even at small load conditions. It may be possible to redistribute the electrical energy among any of the plurality of cells 101, 102, 103 only using the buck function (shown in Fig. 2a). In particular, the total energy of the plurality of cells 101, 102, 103 may be charged to one or more selected ones of the plurality of cells (e.g. cell 102 as illustrated in Fig. 2a). On the other hand, using the boost function one or more selected ones of the plurality of cells may be discharged more than the others of the plurality of cells (as shown in Fig. 2b). Overall, the resonant converter may be used in various combinations for charging / discharging of the different cells.

A benefit of the described charging / balancing scheme is the low power dissipation. This means that a controlled charging / discharging of the battery cells of a battery stack 100 may be performed in a power efficient manner.

Time multiplexing schemes may be used to charge / discharge individual battery cells. In particular, different time slots may be assigned to different battery cells. The charging / discharging of a battery cell may be performed within the assigned time slot of the battery cell. By doing this, a single resonant converter may be used for the charging / discharging of a plurality of individual battery cells. As such, in the different time slots the cells may be balanced individually.

Alternatively or in addition, two or more cells in series may be balanced at the same time (using an appropriate switch matrix).

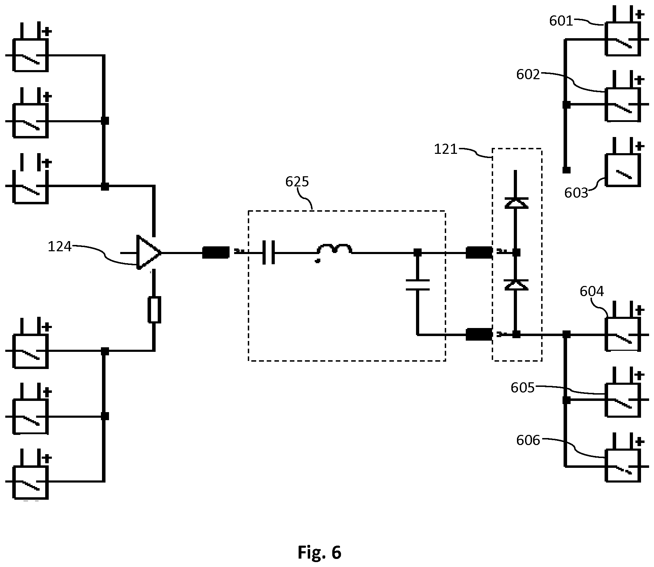

Fig. 6 illustrates an example charging system comprising a single driver circuit 124 and a single resonance circuit 625. The example charging system comprises a switch matrix configured to switch around converter elements. Furthermore, the charging system comprises a switch matrix comprising a plurality of switch pairs 601, 604 and 602, 605 and 603, 606 for the corresponding plurality of battery cells 101, 102, 103. Switch 601 may be coupled to the upper side of battery cell 101, switch 602 may be coupled to the upper side of battery cell 102, and switch 603 may be coupled to the upper side of battery cell 103. Switch 604 may be coupled to the lower side of battery cell 101, switch 605 may be coupled to the lower side of battery cell 102, and switch 603 may be coupled to the lower side of battery cell 103.

The switch pairs may be used to couple one of the plurality of battery cells 101, 102, 103 to the output of the rectifying unit 121, thereby allowing the selected one of the plurality of battery cells 101, 102, 103 to be charged. If one of the switch pairs is closed, the other switch pairs may be open, thereby decoupling the respective others of the plurality of battery cells 101, 102, 103 from the output of the rectifying unit 121.

Furthermore, the switches (e.g. the transistors) 601, 602, 603, 604, 605, 606 may be controlled to couple a subset (e.g. a subseries) of the serial arrangement of battery cells 101, 102, 103 to the single resonance circuit 625. By way of example, the switches 601 and 605 may be closed, while keeping the other switches open, thereby coupling the subset (i.e. the sub serial arrangement) of cells 101, 102 to the resonance circuit 615. By doing this, the subset of cells may be charged (or discharged) jointly.

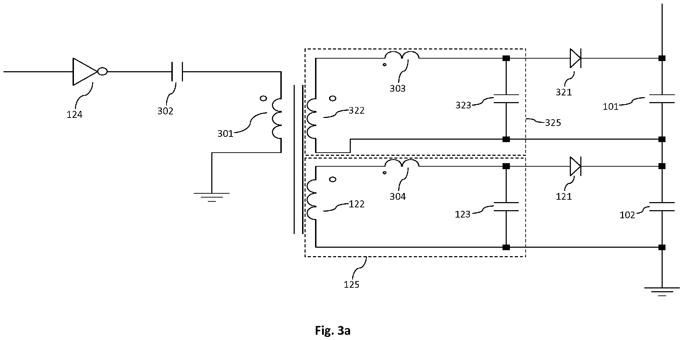

Figs. 3a to 3d illustrate the use of LLC converters as resonant converters for the charging / discharging of the cells 101, 102, 103 of a battery stack 100. The LLC converter of Fig. 3a comprises a transformer with a primary winding 301 and several secondary windings 322, 122. The transformer typically comprises leakage inductors 303, 304, which are illustrated in Fig. 3a. As such, the additional inductors 303, 304 of the LLC converter may be a part of the transformer (leakage inductors). Furthermore, the converter comprises a primary capacitor 302, as well as resonance capacitors 323, 123. The resonance capacitors 323, 123 may be different, in order to provide different resonance frequencies for the different cells 101, 102. In particular, the different resonance capacitors 323, 123 may be adjusted individually to the respective different cells 101, 102. In addition, the converter comprises rectifying units 321, 121 configured to provide a DC voltage to the respective cells 101, 102. In the illustrated example, a half-wave rectifier (comprising a single diode) is used.

The LLC converters of Fig. 3a comprise resonance circuits 325, 125 (LLC circuits in the illustrated example) with resonance frequencies which may be adapted to the respective battery cells 101, 102, which are to be charged using the LLC converters. Fig. 4 shows two different resonance curves of two different resonance circuits 325, 125 having resonance peaks 411, 412 at different resonance frequencies. The driver circuit 124 of the charging system of Fig. 3a may be configured to generate an alternating voltage at a pre-determined AC frequency 402 (e.g. 1M Hz). It can be seen in Fig. 4 that the two different resonance circuits 325, 125 are configured to provide different output voltages 401 for the pre-determined AC frequency 402. The output voltage 401 may be adjusted to the voltage requirements of the respective battery cells 101, 102. This may be achieved by adjusting the resonance frequency of the resonance circuits 325, 125 based on the charging voltage requirements of the respective battery cells 101, 102 which are to be charged / discharged using the resonance circuits 325, 125. In the illustrated example of Fig. 3a, the first battery cell 101 is to be charged by the resonance circuit 325 and the second battery cell 102 is to be charged by the resonance circuit 125.

In a similar manner, the resonance circuits 325, 125 of Fig. 3a may be operated as a buck or as a boost by modifying the frequency of the alternating voltage. It should be noted that the resonance frequency may be adjusted at the primary and / or the secondary leakage inductor. Typically, an LLC acts only at the leakage inductor. An additional inductor may be added. An ideal transformer is typically able to transfer a voltage from one side to the other side. Using a part of the windings, which are not used for the transformer, a resonant converter may be implemented.

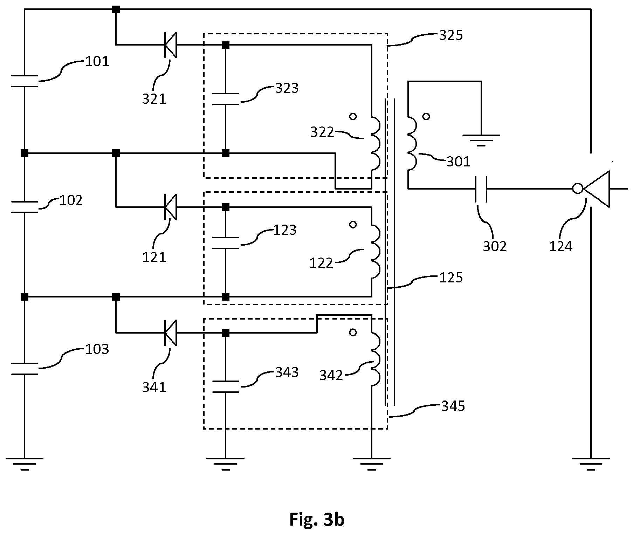

The system of Fig. 3b shows the use of an LLC converter with multiple outputs for the loading of a plurality of respective battery cells 101, 102, 103. Different resonance circuits 325, 125, 345 with differently valued capacitors 323, 123, 343 and/or inductors 322, 122, 342 may be used to adjust the resonance frequency of the LLC converter to the respective battery cell 101, 102, 103. Furthermore, rectifying units 321, 121, 341 may be used to provide rectified output voltages for the different battery cells 101, 102, 103.

The supply variations of the driver can be compensated with the frequency. This means that the AC frequency 402 of the alternating voltage may be adapted (e.g. regulated) to provide a constant output voltage at a respective battery cell 101, 102, 103, even subject to variations of the power supply of the driver 124. The benefit of using an LLC converter comprising a transformer is that no selecting switches are required to couple the resonant converter to a particular one or more of the battery cells 101, 102, 103. This may be beneficial for high voltage applications, where the voltage may exceed the operating voltages of the switching technology.

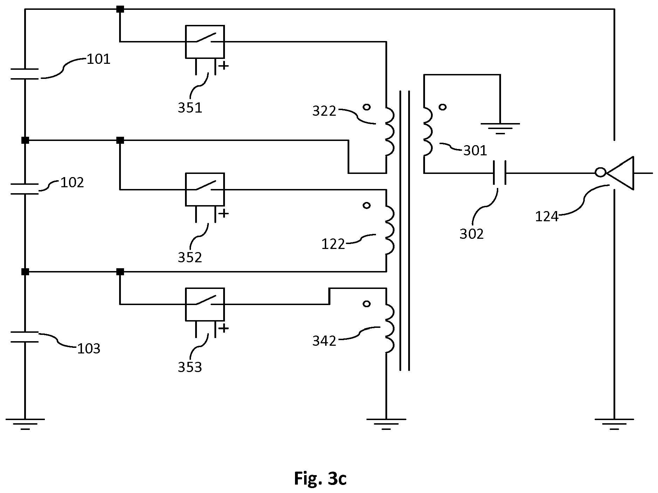

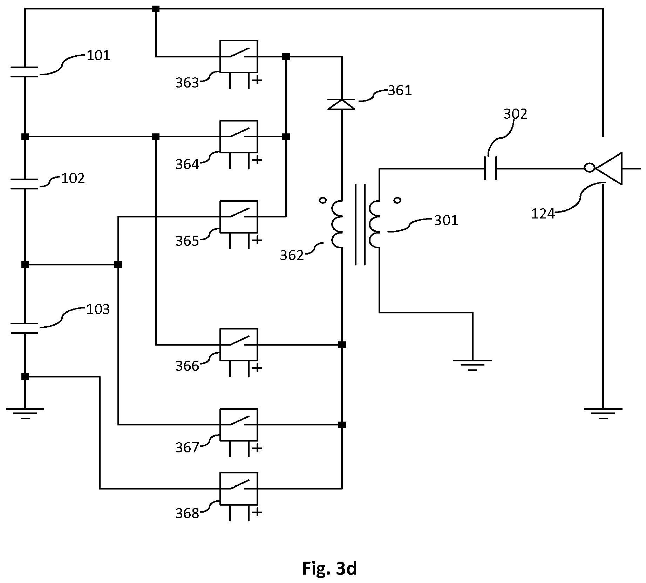

Fig. 3c shows an example of a system comprising an LLC converter, where the rectifying units are implemented as switches 351, 352, 353 (e.g. transistors such as metal oxide semiconductor field effect transistors, MOSFET), providing a half wave rectifier. Fig. 3d shows an example system comprising pairs of switches 363, 364, 365, 366, 367, 368 to provide full-wave rectifiers.

Fig. 5 shows an example of a system used for charge balancing. In particular, the system of Fig. 5 may be used to discharge an individual one of the plurality of battery cells 101, 102, 103 and bring the energy to one or more of the other ones of the plurality of battery cells 101, 102, 103. In the illustrated system of Fig. 5, the switch pairs 503, 506 and 504, 507 and 505, 508 are the driver circuits 124 for the LLC converter. By closing one or more of the switch pairs, energy can be drawn from respective one or more of the plurality of cells 101, 102, 103, to provide an alternating voltage / current at the inductor 362. The capacitor 502 and the transformer comprising the inductor 362 and the inductor 301 form a resonance circuit which attenuates and/or amplifies the alternating voltage / current, in dependence on the frequency 402 of the alternating voltage / current. At the output of the resonance circuit, the alternating voltage / current is rectified using the diode 561. The rectified voltage / current may be provided to charge the common rail of the serial arrangement of battery cells 101, 102, 103. In other words, the rectified voltage / current may be coupled to or may be fed back to the upper side of the battery cell 101, i.e. to the high voltage side of the battery stack 100 (as opposed to the low voltage side of the battery stack 100 which may be coupled to ground).

The configuration of Fig. 5 may be used to transfer energy between the different cells 101, 102, 103 (depending on which one or more of the switch pairs are closed). The LLC resonance circuit may be acting as a boost (e.g. via the transformer ratio) and the fine tuning of the output voltage may be done by the frequency of the alternating voltage / current generated by the one or more switch pairs. In the configuration of Fig. 5 the diode losses may be neglected, because of the relatively higher voltage at the common rail (compared to the individual voltages at the individual battery cells).

It should be noted that the charging / discharging systems described in the present document may comprise a controller (not shown) configured to control the driver circuits to modify the AC frequency 402. The controller may be aware of the voltage requirements of the different battery cells of the battery 100. Furthermore, the controller may be aware of or may be configured to determine the AC frequencies 402 which adapt the output voltage of the resonance circuit(s) in accordance to the voltage requirements of the different battery cells. In addition, the controller may be configured to control the switches of the charging / discharging system (e.g. in order to implement a time multiplexing of the different battery cells). Furthermore, the controller may be configured to adjust the AC frequency 402 in dependence of a sensed variation of a DC voltage of a power source (e.g. of the charger 110 or of another battery cell of the battery 100).

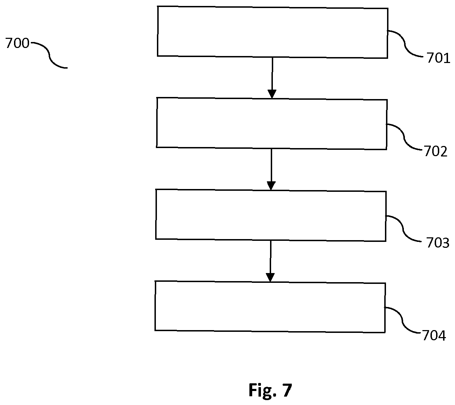

Fig. 7 shows a flow chart of an example method 700 for charging a subset of battery cells 102 from a battery 100 comprising a serial arrangement of battery cells 101, 102, 103. The method 700 comprises generating 701 an AC voltage at an AC frequency 402 from a power source, e.g. from a charger 110 or from another battery cell of the battery 100, at a DC voltage. Furthermore, the method 700 comprises amplifying and/or attenuating 702 the AC voltage as a function of the AC frequency 402, to yield a modified AC voltage. In addition, the method 700 comprises generating 703 a modified DC voltage from the modified AC voltage. Furthermore, the method 700 comprises providing 704 power at the modified DC voltage to the first subset of battery cells.

As outlined above, the charging / discharging system comprises a resonance circuit which forms a DC / DC converter in conjunction with the driver circuit and the rectifying unit. This DC / DC converter may be used for the charge balancing of battery or storage cells (as outlined in the present document). Furthermore, the same DC / DC converter may be used for power conversion purposes within the device or system comprising the storage cells. In particular, the DC / DC converter may be used for charge balancing, when the storage cells are being charged. On the other hand, when the storage cells are not being charged, the DC / DC converter may be used to convert the electric energy provided by the battery into electric energy at the voltage level of some or all of the components of the device or system which comprises the battery (e.g. the electric vehicle or the electronic device).

In the present document, a system for charging / discharging one or more cells of a battery has been described. The system allows for a flexible balancing of the plurality of cells of a battery. Furthermore, the system allows for the provision of flexible input / output voltages for charging / discharging of one or more cells of the battery. In addition, for isolation no transformer is required by using a PRC (LC resonant converter). Furthermore, the input and output can be exchanged, meaning that the charging / discharging concept is a bidirectional concept. In addition, the described charging / discharging concept allows for energy transfer from cell to cell and from the stacked cells. In particular, the concept (buck/ boost) can be used in several configurations and is flexible without a DC path (capacitor or transformer decoupling).

In other words, the described charging / discharging system may work in an isolated manner from cell to cell of the battery stack without transformer (e.g. using time multiplexing). The charging / discharging voltage may be flexibly adjusted over a large voltage range. The described system may be implemented at low cost and with low sized external components. Furthermore, the described system provides a high efficiency over the complete voltage range (a high Q factor is not required, e.g. a factor 3 may be sufficient, thereby reducing the requirements with regards to the characteristics of the one or more capacitors and the one or more inductors).

It should be noted that the description and drawings merely illustrate the principles of the proposed methods and systems. Those skilled in the art will be able to implement various arrangements that, although not explicitly described or shown herein, embody the principles of the invention and are included within its spirit and scope. Furthermore, all examples and embodiment outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

## Claims

1. A system (120) configured to charge with electric energy a first subset of storage cells (102) and a second subset of storage cells (101) from a storage (100) comprising a serial arrangement of storage cells (101, 102, 103), the system (120) comprising
- a driver circuit (124) configured to generate an AC voltage comprising a frequency component at an AC frequency (402) from an electric energy source at a DC voltage;
- a transformer comprising a primary inductor (301) excited by the driver circuit and a first and a second secondary inductor (122, 322) which are magnetically coupled to the primary inductor (301);
- a first resonance circuit (125) configured to amplify and/or attenuate an amplitude of the AC voltage as a function of the AC frequency (402), to yield a first modified AC voltage; wherein the first resonance circuit (125) comprises the first secondary inductor (122); wherein a gain of the first resonance circuit (125) is at a maximum, if the AC frequency corresponds to a first resonance frequency of the first resonance circuit (125); and wherein the gain decreases from the maximum for AC frequencies which are higher or lower than the first resonance frequency;
- a first rectifying unit (121) configured to generate a first modified DC voltage from the first modified AC voltage, and configured to provide electric energy at the first modified DC voltage to the first subset of storage cells (102);
- a second resonance circuit (325) configured to amplify and/or attenuate an amplitude the AC voltage as a function of the AC frequency (402), to yield a second modified AC voltage; wherein the second resonance circuit (225) comprises the second secondary inductor (322); wherein a gain of the second resonance circuit (225) is at a maximum, if the AC frequency corresponds to a second resonance frequency of the second resonance circuit (225); and wherein the gain decreases from the maximum for AC frequencies which are higher or lower than the second resonance frequency;
- a second rectifying unit (321) configured to generate a second modified DC voltage from the second modified AC voltage, and configured to provide electric energy at the second modified DC voltage to the second subset of storage cells (101); and
**characterised in that** the system comprises:
- a controller which is configured to adjust the AC frequency in dependence on charging voltage requirements of the first subset of storage cells (102) and/or the second subset of storage cells (101).

2. The system (120) of claim 1, wherein the electric energy source comprises
- a charger (110) configured to provide a charge current to the storage (100) at the DC voltage; and/or
- another subset of storage cells (102) from the storage (100); wherein the first subset is different from the another subset of storage cells.

3. The system (120) of any previous claims, wherein first resonance circuit (125) comprises a LC circuit.

4. The system (120) of any previous claims, wherein
- the system (120) comprises a first set of switches (601, 604) configured to couple or decouple the first rectifying unit (121) to or from the first subset of storage cells (102);
- the controller is configured to control the first set of switches (601, 604) to couple the first rectifying unit (121) to the first subset of storage cells (102) during a first pre-determined isolated time slot assigned to the charging of the first subset of storage cells (102); and
- the controller is configured to control the first set of switches (601, 604) to decouple the first rectifying unit (121) from the first subset of storage cells (102) during a second pre-determined isolated time slot which is not assigned to the charging of the first subset of storage cells (102).

5. The system (102) of any previous claims, wherein the controller is configured to
- receive an indication of the DC voltage; and
- determine the AC frequency (402) in dependence on the DC voltage, such that relative absolute variations of the first modified DC voltage are at or below a pre-determined variation threshold.

6. The system (120) of any previous claims, wherein a resonance frequency of the first resonance circuit (125) is adapted based on charging voltage requirements of the first subset of storage cells (102); and wherein a resonance frequency of the second resonance circuit (325) is adapted based on charging voltage requirements of the second subset of storage cells (101).

7. The system (120) of any previous claim, wherein the first and second resonance circuits (125, 325) have different resonance frequencies.

8. The system (120) of any previous claims, wherein the first rectifying unit (121)
- comprises one or more diodes and/or switches; and/or
- is configured to perform half-wave or full-wave rectification of the modified AC voltage.

9. The system (120) of any previous claims, wherein
- the driver circuit (124) comprises a half-bridge comprising a high-side switch (503) and a low side switch (506) which are opened and/or closed in accordance to the AC frequency (402), such that at a particular time instant at the most only one of the high-side switch (503) and the low side switch (506) is closed; and
- the AC voltage is provided at a midpoint of the half-bridge.

10. The system (120) of any previous claims, wherein the first resonance frequency and the second resonance frequency are different.

11. The system (120) of any previous claims, wherein
- the first resonance frequency depends on the charging voltage requirements of the first subset of storage cells (102); and
- the second resonance frequency depends on the charging voltage requirements of the second subset of storage cells (101).

12. A method (700) for charging a first subset of storage cells (102) and a second subset of storage cells (101) from a storage (100) comprising a serial arrangement of storage cells (101, 102, 103), the method (700) comprising
- generating (701) an AC voltage comprising a frequency component at an AC frequency (402) from a electric energy source at a DC voltage;
- providing a transformer comprising a primary inductor (301) excited at the AC frequency and a first and a second secondary inductor (122, 322) which are magnetically coupled to the primary inductor (301);
- amplifying and/or attenuating (702) an amplitude of the AC voltage as a function of the AC frequency (402), to yield a first modified AC voltage using a first resonance circuit (125) comprising the first secondary inductor (122) and to yield a second modified AC voltage using a second resonance circuit (325) comprising the second secondary inductor (322); wherein the first resonance circuit (125) comprises the first secondary inductor (122); wherein a gain of the first resonance circuit (125) is at a maximum, if the AC frequency corresponds to a first resonance frequency of the first resonance circuit (125); and wherein the gain decreases from the maximum for AC frequencies which are higher or lower than the first resonance frequency; wherein a gain of the second resonance circuit (225) is at a maximum, if the AC frequency corresponds to a second resonance frequency of the second resonance circuit (225); and wherein the gain decreases from the maximum for AC frequencies which are higher or lower than the second resonance frequency;
- generating (703) a first modified DC voltage from the first modified AC voltage and a second modified DC voltage from the second modified AC voltage;
- providing (704) electric energy at the first modified DC voltage to the first subset of storage cells (102) and at the second modified DC voltage to the second subset of storage cells (102); and
- adjusting the AC frequency in dependence on charging voltage requirements of the first subset of storage cells (102) and/or the second subset of storage cells (101).

## Patentansprüche

1. System (120), welches konfiguriert ist, eine erste Teilmenge von Speicherzellen (102) und eine zweite Teilmenge von Speicherzellen (101) aus einem Speicher (100), welcher eine serielle Anordnung von Speicherzellen (101, 102, 103) umfasst, mit elektrischer Energie zu laden, das System (120) Folgendes umfassend
- eine Treiberschaltung (124), welche konfiguriert ist, eine Wechselspannung, welche eine Frequenzkomponente mit einer Wechselstromfrequenz (402) umfasst, aus einer elektrischen Energiequelle mit einer Gleichspannung zu erzeugen;
- einen Transformator, welcher eine primäre Induktionsspule (301), welche durch die Treiberschaltung erregt wird, und eine erste und eine zweite sekundäre Induktionsspule (122, 322) umfasst, welche mit der primären Induktionsspule (301) magnetisch gekoppelt sind;
- eine erste Resonanzschaltung (125), welche konfiguriert ist, eine Amplitude der Wechselspannung als eine Funktion der Wechselstromfrequenz (402) zu verstärken und/oder zu dämpfen, um eine erste modifizierte Wechselspannung zu erhalten; wobei die erste Resonanzschaltung (125) die erste sekundäre Induktionsspule (122) umfasst; wobei ein Verstärkungswert der ersten Resonanzschaltung (125) maximal ist, wenn die Wechselstromfrequenz einer ersten Resonanzfrequenz der ersten Resonanzschaltung (125) entspricht; und wobei der Verstärkungswert für Wechselstromfrequenzen von dem Maximum abfällt, welche größer oder kleiner als die erste Resonanzfrequenz sind;
- eine erste Gleichrichtereinheit (121), welche konfiguriert ist, eine erste modifizierte Gleichspannung aus der ersten modifizierten Wechselspannung zu erzeugen, und konfiguriert ist, elektrische Energie mit der ersten modifizierten Gleichspannung für die erste Teilmenge von Speicherzellen (102) bereitzustellen;
- eine zweite Resonanzschaltung (325), welche konfiguriert ist, eine Amplitude der Wechselspannung als eine Funktion der Wechselstromfrequenz (402) zu verstärken und/oder zu dämpfen, um eine zweite modifizierte Wechselspannung zu erhalten; wobei die zweite Resonanzschaltung (225) die zweite sekundäre Induktionsspule (322) umfasst; wobei ein Verstärkungswert der zweiten Resonanzschaltung (225) maximal ist, wenn die Wechselstromfrequenz einer zweiten Resonanzfrequenz der zweiten Resonanzschaltung (225) entspricht; und wobei der Verstärkungswert für Wechselstromfrequenzen von dem Maximum abfällt, welche größer oder kleiner als die zweite Resonanzfrequenz sind;
- eine zweite Gleichrichtereinheit (321), welche konfiguriert ist, eine zweite modifizierte Gleichspannung aus der zweiten modifizierten Wechselspannung zu erzeugen, und konfiguriert ist, elektrische Energie mit der zweiten modifizierten Gleichspannung für die zweite Teilmenge von Speicherzellen (101) bereitzustellen; und **dadurch gekennzeichnet, dass** das System Folgendes umfasst:
- eine Steuervorrichtung, welche konfiguriert ist, die Wechselstromfrequenz in Abhängigkeit von Ladespannungsanforderungen der ersten Teilmenge von Speicherzellen (102) und/oder der zweiten Teilmenge von Speicherzellen (101) einzustellen.

2. System (120) nach Anspruch 1, wobei die elektrische Energiequelle Folgendes umfasst
- ein Ladegerät (110), welches konfiguriert ist, dem Speicher (100) bei der Gleichspannung einen Ladestrom bereitzustellen; und/oder
- eine andere Teilmenge von Speicherzellen (102) aus dem Speicher (100); wobei die erste Teilmenge von der anderen Teilmenge von Speicherzellen verschieden ist.

3. System (120) nach einem der vorhergehenden Ansprüche, wobei eine erste Resonanzschaltung (125) eine LC-Schaltung umfasst.

4. System (120) nach einem der vorhergehenden Ansprüche, wobei
- das System (120) eine erste Menge Schalter (601, 604) umfasst, welche konfiguriert sind, die erste Gleichrichtereinheit (121) mit der ersten Teilmenge von Speicherzellen (102) zu verbinden oder diese davon zu trennen;
- die Steuervorrichtung konfiguriert ist, die erste Menge Schalter (601, 604) zu steuern, um die erste Gleichrichtereinheit (121) während eines ersten vorbestimmten isolierten Zeitschlitzes, welcher dem Laden der ersten Teilmenge von Speicherzellen (102) zugeordnet ist, mit der ersten Teilmenge von Speicherzellen (102) zu verbinden; und
- die Steuervorrichtung konfiguriert ist, die erste Menge Schalter (601, 604) zu steuern, um die erste Gleichrichtereinheit (121) während eines zweiten vorbestimmten isolierten Zeitschlitzes, welcher nicht dem Laden der ersten Teilmenge von Speicherzellen (102) zugeordnet ist, von der ersten Teilmenge von Speicherzellen (102) zu trennen.

5. System (120) nach einem der vorhergehenden Ansprüche, wobei die Steuervorrichtung konfiguriert ist, um
- eine Angabe der Gleichspannung zu erhalten; und
- die Wechselstromfrequenz (402) in Abhängigkeit von der Gleichspannung derartig zu bestimmen, dass relative absolute Variationen der ersten modifizierten Gleichspannung auf oder unter einem vorbestimmten Variationsschwellenwert liegen.

6. System (120) nach einem der vorhergehenden Ansprüche, wobei eine Resonanzfrequenz der ersten Resonanzschaltung (125) auf der Grundlage von Ladespannungsanforderungen der ersten Teilmenge von Speicherzellen (102) angepasst ist; und wobei eine Resonanzfrequenz der zweiten Resonanzschaltung (325) auf der Grundlage von Ladespannungsanforderungen der zweiten Teilmenge von Speicherzellen (101) angepasst ist.

7. System (120) nach einem der vorhergehenden Ansprüche, wobei die erste und die zweite Resonanzschaltung (125, 325) verschiedene Resonanzfrequenzen aufweisen.

8. System (120) nach einem der vorhergehenden Ansprüche, wobei die erste Gleichrichtereinheit (121)
- eine oder mehrere Dioden und/oder Schalter umfasst; und/oder
- konfiguriert ist, eine Einweg- oder Doppelweggleichrichtung der modifizierten Wechselspannung durchzuführen.

9. System (120) nach einem der vorhergehenden Ansprüche, wobei
- die Treiberschaltung (124) eine Halbbrücke umfasst, welche einen High-Side-Schalter (503) und einen Low-Side-Schalter (506) umfasst, welche gemäß der Wechselstromfrequenz (402) derartig geöffnet und/oder geschlossen werden, dass zu einem bestimmten Zeitpunkt höchstens nur entweder der High-Side-Schalter (503) oder der Low-Side-Schalter (506) geschlossen ist; und
- die Wechselspannung an einem Mittelpunkt der Halbbrücke bereitgestellt wird.

10. System (120) nach einem der vorhergehenden Ansprüche, wobei die erste Resonanzfrequenz und die zweite Resonanzfrequenz verschieden sind.

11. System (120) nach einem der vorhergehenden Ansprüche, wobei
- die erste Resonanzfrequenz von den Ladespannungsanforderungen der ersten Teilmenge von Speicherzellen (102) abhängt; und
- die zweite Resonanzfrequenz von den Ladespannungsanforderungen der zweiten Teilmenge von Speicherzellen (101) abhängt.

12. Verfahren (700) zum Laden einer ersten Teilmenge von Speicherzellen (102) und einer zweiten Teilmenge von Speicherzellen (101) aus einem Speicher (100), welcher eine serielle Anordnung von Speicherzellen (101, 102, 103) umfasst, das Verfahren (700) Folgendes umfassend
- Erzeugen (701) einer Wechselspannung, welche eine Frequenzkomponente mit einer Wechselstromfrequenz (402) umfasst, aus einer elektrischen Energiequelle mit einer Gleichspannung;
- Bereitstellen eines Transformators, welcher eine primäre Induktionsspule (301), welche mit der Wechselstromfrequenz erregt wird, und eine erste und eine zweite sekundäre Induktionsspule (122, 322) umfasst, welche mit der primären Induktionsspule (301) magnetisch gekoppelt sind;
- Verstärken und/oder Dämpfen (702) einer Amplitude der Wechselspannung als eine Funktion der Wechselstromfrequenz (402), um eine erste modifizierte Wechselspannung unter Verwendung einer ersten Resonanzschaltung (125) zu erhalten, welche die erste sekundäre Induktionsspule (122) umfasst, und um eine zweite modifizierte Wechselspannung unter Verwendung einer zweiten Resonanzschaltung (325) zu erhalten, welche die zweite sekundäre Induktionsspule (322) umfasst; wobei die erste Resonanzschaltung (125) die erste sekundäre Induktionsspule (122) umfasst; wobei ein Verstärkungswert der ersten Resonanzschaltung (125) maximal ist, wenn die Wechselstromfrequenz einer ersten Resonanzfrequenz der ersten Resonanzschaltung (125) entspricht; und wobei der Verstärkungswert für Wechselstromfrequenzen von dem Maximum abfällt, welche größer oder kleiner als die erste Resonanzfrequenz sind; wobei ein Verstärkungswert der zweiten Resonanzschaltung (225) maximal ist, wenn die Wechselstromfrequenz einer zweiten Resonanzfrequenz der zweiten Resonanzschaltung (225) entspricht; und wobei der Verstärkungswert für Wechselstromfrequenzen von dem Maximum abfällt, welche größer oder kleiner als die zweite Resonanzfrequenz sind;
- Erzeugen (703) einer ersten modifizierten Gleichspannung aus der ersten modifizierten Wechselspannung und einer zweiten modifizierten Gleichspannung aus der zweiten modifizierten Wechselspannung;
- Bereitstellen (704) elektrischer Energie mit der ersten modifizierten Gleichspannung für die erste Teilmenge von Speicherzellen (102) und mit der zweiten modifizierten Gleichspannung für die zweite Teilmenge von Speicherzellen (102); und
- Einstellen der Wechselstromfrequenz in Abhängigkeit von Ladespannungsanforderungen der ersten Teilmenge von Speicherzellen (102) und/oder der zweiten Teilmenge von Speicherzellen (101) .

## Revendications

1. Système (120) configuré pour charger en énergie électrique un premier sous-ensemble d'accumulateurs (102) et un deuxième sous-ensemble d'accumulateurs (101) à partir d'un élément accumulateur (100) comprenant un agencement en série d'accumulateurs (101, 102, 103), le système (120) comprenant
- un circuit pilote (124) configuré pour générer une tension CA comprenant un composant de fréquence à une fréquence CA (402) venant d'une source d'énergie électrique à une tension CC,
- un transformateur comprenant un inducteur primaire (301) excité par le circuit pilote et un premier et un deuxième inducteur secondaire (122, 322) qui sont magnétiquement couplés à l'inducteur primaire (301),
- un premier circuit de résonance (125) configuré pour amplifier et/ou atténuer une amplitude de la tension CA en fonction de la fréquence CA (402) pour fournir une première tension CA modifiée, le premier circuit de résonance (125) comprenant le premier inducteur secondaire (122), un gain du premier circuit de résonance (125) étant à un maximum, si la fréquence CA correspond à une première fréquence de résonance du premier circuit de résonance (125), et, le gain diminuant du maximumm pour des fréquences CA qui sont plus élevées ou plus basses que la première fréquence de résonance,
- une première unité de redressement (121) configurée pour générer une première tension CC modifiée à partir de la première tension CA modifiée et configurée pour fournir de l'énergie électrique à la première tension CC modifiée au premier sous-ensemble d'accumulateurs (102),
- un deuxième circuit de résonance (325) configuré pour amplifier et/ou atténuer une amplitude de la tension CA en fonction de la fréquence CA (402), pour fournir une deuxième tension CA modifiée, le deuxième circuit de résonance (225) comprenant le deuxième inducteur secondaire (322), un gain du deuxième circuit de résonance (225) étant à un maximum, si la fréquence CA correspond à une deuxième fréquence de résonance du deuxième circuit de résonance (225), et, le gain diminuant à partir du maximum pour des fréquences CA qui sont plus élevées ou plus basses que la deuxième fréquence de résonance,
- une deuxième unité de redressement (321) configurée pour générer une deuxième tension CC modifiée à partir de la deuxième tension CA modifiée et configurée pour fournir de l'énergie électrique à la deuxième tension CC modifiée au deuxième sous-ensemble d'accumulateurs (101), et
**caractérisé en ce que** le système comprend :
- un contrôleur qui est configuré pour ajuster la fréquence CA en fonction des exigences de tension de charge du premier sous-ensemble d'accumulateurs (102) et/ou du deuxième sous-ensemble d'accumulateurs (101).

2. Système (120) selon la revendication 1, la source d'énergie électrique comprenant
- un chargeur (110) configuré pour fournir un courant de charge à l'élément accumulateur (100) à la tension CC, et/ou
- un autre sous-ensemble d'accumulateurs (102) depuis l'élément accumulateur (100), le premier sous-ensemble étant différent de l'autre sous-ensemble d'accumulateurs.

3. Système (120) selon l'une quelconque des revendications précédentes, le premier circuit de résonance (125) comprenant un circuit LC.

4. Système (120) selon l'une quelconque des revendications précédentes,
- le système (120) comprenant un premier jeu d'interrupteurs (601, 604), configuré pour coupler ou découpler la première unité de redressement (121) à ou du premier sous-ensemble d'accumulateurs (102),
- le contrôleur étant configuré pour contrôler le premier jeu d'interrupteurs (601, 604) pour coupler la première unité de redressement (121) au premier sous-ensemble d'accumulateurs (102) pendant une première tranche de temps isolée prédéterminée attribuée à la charge du premier sous-ensemble d'accumulateurs (102), et
- le contrôleur étant configuré pour contrôler le premier jeu d'interrupteurs (601, 604) pour découpler la première unité de redressement (121) du premier sous-ensemble d'accumulateurs (102) pendant une deuxième tranche de temps isolée prédéterminée qui n'est pas attribuée à la charge du premier sous-ensemble d'accumulateurs (102).

5. Système (120) selon l'une quelconque des revendications précédentes, le contrôleur étant configuré pour
- recevoir une indication de la tension CC, et
- déterminer la fréquence CA (402) en fonction de la tension CC de telle sorte que les variations absolues relatives de la première tension CC modifiée sont à un seuil de variation prédéterminé ou en dessous.

6. Système (120) selon l'une quelconque des revendications précédentes, une fréquence de résonance du premier circuit de résonance (125) étant adaptée en se basant sur les exigences de tension de charge du premier sous-ensemble d'accumulateurs (102) et une fréquence de résonance du deuxième circuit de résonance (325) étant adaptée en se basant sur les exigences de tension de charge du deuxième sous-ensemble d'accumulateurs (101).

7. Système (120) selon l'une quelconque des revendications précédentes, le premier et le deuxième circuit de résonance (125, 325) ayant des fréquences de résonance différentes.

8. Système (120) selon l'une quelconque des revendications précédentes, la première unité de redressement (121)
- comprenant une ou plusieurs diodes et/ou interrupteurs, et/ou
- étant configurée pour réaliser un redressement en demi-alternance ou double alternance de la tension CA modifiée.

9. Système (120) selon l'une quelconque des revendications précédentes,
- le circuit pilote (124) comprenant un demi-pont comprenant un interrupteur à haut potentiel (503) et un interrupteur à bas potentiel (506) qui sont ouverts et/ou fermés selon la fréquence CA (402) de telle sorte qu'à un moment particulier, tout au , seul un interrupteur à haut potentiel (503) et un interrupteur à bas potentiel (506) est fermé, et
- la tension CA étant fournie à un point médian du demi-pont.

10. Système (120) selon l'une quelconque des revendications précédentes, la première fréquence de résonance et la deuxième fréquence de résonance étant différentes.

11. Système (120) selon l'une quelconque des revendications précédentes,
- la première fréquence de résonance dépendant des exigences de tension de charge du premier sous-ensemble d'accumulateurs (102), et
- la deuxième fréquence de résonance dépendant des exigences de tension de charge du deuxième sous-ensemble d'accumulateurs (101).

12. Méthode (700) pour charger un premier sous-ensemble d'accumulateurs (102) et un deuxième sous-ensemble d'accumulateurs (101) à partir d'un élément accumulateur (100) comprenant un agencement en série d'accumulateurs (101, 102, 103), la méthode (700) comprenant les étapes consistant à :
- générer (701) une tension CA comprenant un composant de fréquence à une fréquence CA (402) à partir d'une source électrique à une tension CC,
- fournir un transformateur comprenant un inducteur primaire (301) excité à la fréquence CA et un premier et un deuxième inducteur secondaire (122, 322) qui sont magnétiquement couplés à l'inducteur primaire (301),
- amplifier et/ou atténuer (702) une amplitude de la tension CA en fonction de la fréquence CA (402) pour fournir une première tension CA modifiée en utilisant un premier circuit de résonance (125) comprenant le premier inducteur secondaire (122) et pour fournir une deuxième tension CA modifiée en utilisant un deuxième circuit de résonance (325) comprenant le deuxième inducteur secondaire (322), le premier circuit de résonance (125) comprenant le premier inducteur secondaire (122), un gain du premier circuit de résonance (125) étant à un maximum, si la fréquence CA correspond à une première fréquence de résonance du premier circuit de résonance (125), et, le gain diminuant du maximum pour des fréquences CA qui sont plus élevées ou plus basses que la première fréquence de résonance, un gain du deuxième circuit de résonance (225) étant à un maximum, si la fréquence CA correspond à une deuxième fréquence de résonance du deuxième circuit de résonance (225), et, le gain diminuant du maximum pour des fréquences CA qui sont plus élevées ou plus basses que la deuxième fréquence de résonance,
- générer (703) une première tension CC modifiée à partir de la première tension CA modifiée et une deuxième tension CC modifiée à partir de la deuxième tension CA modifiée,
- fournir (704) de l'énergie électrique à la première tension CC modifiée au premier sous-ensemble d'accumulateurs (102) et à la deuxième tension CC modifiée au deuxième sous-ensemble d'accumulateurs (102), et
- ajuster la fréquence CA en fonction des exigences de tension de charge du premier sous-ensemble d'accumulateurs (102) et/ou du deuxième sous-ensemble d'accumulateurs (101).
